# FASCICULE DE BREVET EUROPEEN

(11) **EP 1 861 224 B1**
(45) Date de publication et mention de la délivrance du brevet: **25.05.2011**
(21) Numéro de dépôt: 06726091.9
(22) Date de dépôt: 14.03.2006
(51) Int. Cl.: B23Q 7/14

(54) **PROCEDE D'APPROVISIONNEMENT EN PIECES D'UN POSTE DE TRAVAIL**
VERFAHREN ZUR ZUFÜHRUNG VON TEILEN ZU EINER ARBEITSSTATION
METHOD FOR SUPPLYING PARTS TO A WORKSTATION

(30) Priorité: 15.03.2005 FR 0502566
(43) Date de publication de la demande: 05.12.2007
(73) Titulaire: Coutier Industrie S.A.R.L., 57970 Basse Ham (FR)
(72) Inventeur: COUTIER, Charles, F-57570 Cattenom (FR)
(74) Mandataire: Robert, Jean-Pierre
(86) Numéro de dépôt international: PCT/FR2006/000565
(87) Numéro de publication internationale: WO 2006/097623

(56) Documents cités:
- DE-U1- 29 712 034
- US-A- 5 226 584
- US-A- 6 028 532
- US-A1- 2002 077 723
- US-A1- 2002 179 410
- SCHMIDT M: "MONTAGEVERKETTUNG MIT FTS" ZWF ZEITSCHRIFT FUR WIRTSCHAFTLICHE FERTIGUNG UND AUTOMATISIERUNG, CARL HANSER VERLAG. MUNCHEN, DE, vol. 82, no. 9, septembre 1987 (1987-09), pages 511-514, XP002038236 ISSN: 0947-0085

## Description

La présente invention concerne l'approvisionnement des postes de travail qui s'échelonnent le long d'une ligne de montage ou de conditionnement ou toute ligne de circulation d'une structure construite progressivement par les pièces que les opérateurs viennent lui adjoindre successivement (voir par example le document SCHMIDT M: "MONTAGEVERKETTUNG MIT FTS" ZWF ZEITSCHRIFT FÜR WIRDTSCHAFTLICHE FERTIGUNG UND AUTOMATISIERUNG, CARL HANSER VERLAG MÜNCHEN, vol .82, no. 9,09-1987, pages 511-514).

### ARRIERE PLAN DE L'INVENTION

Les pièces à intégrer dans la structure qui évolue le long de la ligne de circulation sont mises à la disposition des opérateurs dans les différents postes au moyen de magasins dont certains sont fixes et d'autres sont mobiles, portés par des bases roulantes. Les magasins mobiles ont pour vocation d'arriver pleins au bord de ligne et d'en repartir vides. En bord de ligne ils sont dans une position de service (l'opérateur de ligne vient y puiser les pièces dont il a besoin), qui est au plus près de la ligne afin de limiter les déplacements de cet opérateur. En général, lorsque le magasin de pièces est vide, l'opérateur de ligne l'évacue pour le remplacer par un magasin plein situé par exemple sur une autre base roulante. Dans certains cas, cette autre base roulante est située dans un poste d'attente voisin du poste de service et en général derrière celui-ci dans une direction perpendiculaire à la ligne de circulation. Les deux bases roulantes sont liées entre elles, de sorte qu'il suffit d'une rotation pour permuter le magasin vide avec un magasin plein. Le magasin plein est alors en position de service tandis que le magasin vide est dans la position d'attente pour un opérateur logistique qui viendra, en temps masqué par rapport au travail de l'opérateur de ligne, substituer à l'embase roulante vide une embase roulante pleine. Le poste de travail doit, pour assurer la liaison des bases, comporter des moyens stationnaires, qui permettent par exemple la permutation circulaire de manière aisée. Ces moyens stationnaires, étant fixés dans le poste de travail, figent d'une certaine manière la disposition des postes de travail le long de la ligne. Ceci constitue un handicap du point de vue de la capacité de la ligne à évoluer. Par ailleurs, l'espace au sol balayé par un pivoteur d'embase est relativement important. Il faut en outre y ajouter un espace latéral également important pour permettre d'orienter les embases les unes par rapport aux autres au moment de leur accostage sur un pivoteur.

En troisième lieu enfin, en notera que l'opérateur de ligne doit manipuler un ensemble comprenant une embase vide et une embase pleine, ce qui est relativement pesant, exigeant de l'opérateur de ligne de développer des efforts conduisant nécessairement à la création d'une fatigue pour cet opérateur.

### BREVE DESCRIPTION DE L'INVENTION

Pour pallier ces inconvénients, l'invention propose un procédé d'approvisionnement en pièces d'un poste de travail situé au bord d'une ligne de circulation d'une succession de structures à chacune desquelles un opérateur de ligne ajoute au moins l'une desdites pièces, qui met en oeuvre des bases roulantes de support et de présentation des pièces à l'opérateur de ligne, le poste de travail comportant un emplacement de bord de ligne destiné à recevoir au moins une base roulante dans une zone de service proche de la ligne et une base roulante dans une zone d'attente située derrière la base roulante en service dans une direction perpendiculaire à cette ligne de circulation.

Plus précisément ce procédé consiste, lorsque la base roulante en service est vide, à faire déplacer par l'opérateur de ligne la base roulante vide de la zone de service vers une zone d'évacuation latéralement adjacente aux positions de service et d'attente susdites, à faire extraire ladite base vide de la zone d'évacuation par un opérateur logistique, à faire déplacer par l'opérateur logistique la base pleine de la zone d'attente vers la zone de service et à faire placer par l'opérateur logistique une nouvelle base pleine dans la zone d'attente ainsi libérée.

On comprend qu'ainsi l'opérateur de ligne n'a qu'à déplacer une base vide. Ce déplacement est aisé et facilement réalisable sous un effort minimal. En outre, dans sa position d'évacuation, la base constitue par elle-même un signal pour un opérateur logistique afin qu'il la traite au plus vite. Alors que cette base n'a pas encore été traitée par l'opérateur logistique, l'opérateur de service a néanmoins accès à la base roulante pleine qui est dans la position d'attente et peut commencer à s'y fournir. Le passage de la base de sa position d'attente à sa position de service est dévolue à l'opérateur logistique sans que cela constitue une préoccupation pour l'opérateur de ligne qui peut tout entier se consacrer à sa tâche. Il en résulte une meilleure qualité du travail. Enfin, la mise en place et les déplacements des ces embases sont assurés sans recours à des moyens fixes appartenant au poste de travail, si bien que ce poste peut évoluer en fonction de la nature des structures défilant sur la ligne de circulation. Seuls par exemple des marquages au sol peuvent être utilisés pour délimiter les emplacements des embases.

A l'expérience, on s'est rendu compte que toutes choses égales par ailleurs, le procédé d'approvisionnement de l'invention permet d'optimiser la surface au sol d'un poste de travail. En outre, cette optimisation est maximale lorsque la base roulante utilisée pour mettre en oeuvre le procédé selon l'invention est de forme inscriptible dans un rectangle de sorte que, dans sa position d'attente et dans sa position de service, la plus grande dimension de ce rectangle est parallèle à la ligne de circulation des structures tandis que dans sa position d'évacuation, cette plus grande dimension est perpendiculaire à la ligne de circulation.

D'autres caractéristiques et avantages de l'invention ressortiront de la description donnée ci-après d'un exemple de sa réalisation.

### BREVE DESCRIPTION DES DESSINS

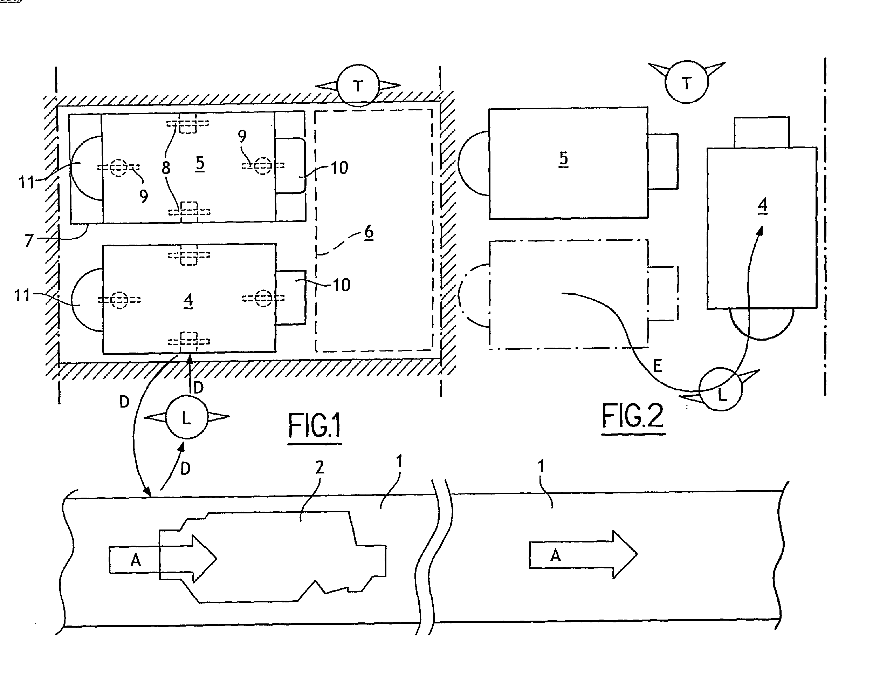

Il sera fait référence aux dessins annexés parmi lesquels les figures 1 à 6 illustrent schématiquement par des vues de dessus les différentes phases de manipulation des bases roulantes ou magasins de pièces constituant le procédé d'approvisionnement de l'invention.

### DESCRIPTION DETAILLEE DE L'INVENTION

Sur ces figures, la ligne de circulation porte la référence 1. Les structures 2 à implémenter ou sur lesquelles sont rajoutées poste après poste des pièces, circulent dans la direction A.

Le poste de travail d'un opérateur de ligne L comprend un tronçon de ligne qui lui fait face et un emplacement 3 délimité à la figure 1 par une zone hachurée, emplacement 3 dans lequel une base roulante 4 formant support et présentoir de pièces est située au plus proche de la ligne 1 tandis qu'une base roulante 5 est située derrière la base 4 dans une direction perpendiculaire à la ligne 1. La base 4 est dans une zone de service et la base 5 est dans une zone d'attente. L'emplacement 3 possède une zone excédentaire par rapport aux embases 4 et 5, notée 6 sur la figure 1, qui constitue l'emplacement pour une base roulante dans une position d'évacuation comme cela sera expliqué par la suite.

Chacune des bases roulantes est inscriptible dans un quadrilatère rectangulaire 7. Elle comporte des organes de roulement fixes 8 et pivotants 9 ainsi que par exemple un timon avant relevable 10 et un crochet ou un organe d'attelage arrière 11. Le timon 10 est représenté aux figures dans sa position relevée.

Dans sa position de service comme dans sa position d'attente, chaque embase 4, 5 présente la plus grande dimension de son rectangle 7 circonscrit parallèlement à la ligne 1.

L'opérateur de ligne, dans un premier temps, évolue entre l'embase 4 en service dans la zone de service et la ligne 1 selon les mouvements indiqués schématiquement par les flèches D.

Lorsque l'embase 4 est vide, l'opérateur de ligne L extrait celle-ci de la zone de service pour la placer dans la zone d'évacuation 6 par une manoeuvre symbolisée par la flèche E sur la figure 2.

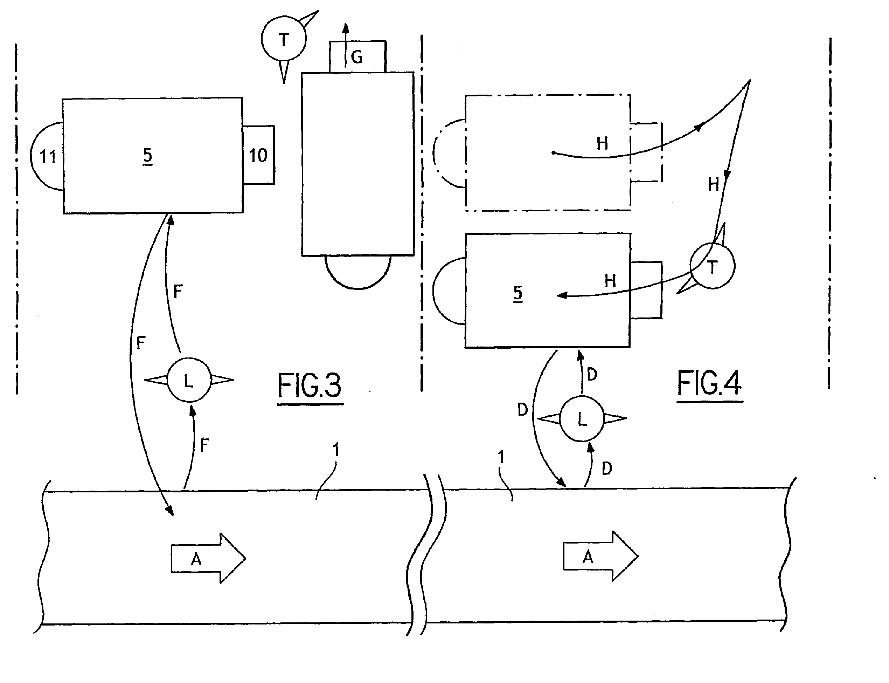

L'opérateur de ligne L poursuit son travail en s'approvisionnant auprès de la base roulante 5 qui se trouve dans la zone d'attente en évoluant selon les flèches F de la figure 3. Dans le même temps un opérateur logistique T ayant remarqué qu'une base se trouve dans une zone d'évacuation 6, extrait cette base de cette position d'évacuation le long d'une direction G perpendiculairement à la ligne 1 pour placer l'embase soit dans une allée de circulation soit l'intégrer dans un train de chariot qui dessert les différents postes le long de la ligne.

Après avoir évacué l'embase 4, l'opérateur T procède au transfert de la base 5 de la zone d'attente à la zone de service par un mouvement symbolisé par les flèches H. L'opérateur de ligne L retrouve son poste de travail dans la configuration de la figure 1.

L'opérateur logistique T vient ensuite le long d'une trajectoire I, mettre en place une autre base roulante 12 en position d'attente derrière la base roulante 5 en service.

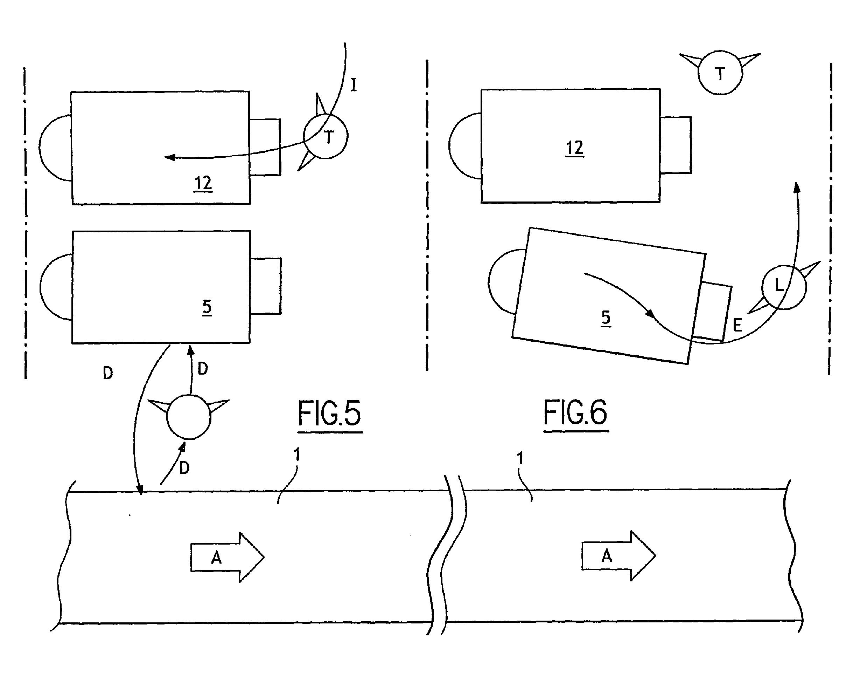

A la figure 6 enfin, on retrouve l'évacuation de la base roulante qui a été vidée par l'opérateur de ligne L selon une trajectoire symbolisée par la flèche E.

Ce qui est décrit ci-dessus constitue le module élémentaire d'un poste de travail qui peut se résumer à ce module ou en revanche comporter deux modules adjacents. Les emplacements d'attente et de service pour les bases roulantes sont alors soit symétriques les uns des autres par rapport à l'emplacement d'évacuation, soit dos à dos avec des emplacements d'évacuation de part et d'autre.

Dans l'exemple décrit, les bases roulantes ont leurs moyens d'attelage et de manoeuvre aux extrémités de la longueur du rectangle. Les organes de roulement 8 et 9 sont situés aux sommets d'un losange inscrit dans le rectangle avec les organes pivotants 9 voisins des moyens d'attelage 10 et 11 et les organes d'orientation fixe 8 voisins du milieu des longs côtés du rectangle. L'axe de rotation de ces organes fixes est transversal. Ce n'est pas sortir du cadre de l'invention que de prévoir ces roues 8 déverrouillables autour d'un axe vertical de pivotement pour améliorer la manoeuvre de la base lors de ses mouvements dans l'espace 3. Les moyens de verrouillage/déverrouillage sont connus en eux-mêmes, le verrouillage pouvant être obtenu de manière automatique quand par exemple la base est attelée à un chariot d'entraînement ou insérée dans un train d'atelier (l'abaissement du timon par exemple constituant la commande du verrouillage).

Dans un autre exemple non représenté, les moyens d'attelage et de manoeuvre de la base sont prévus au centre des grands côtés du rectangle. Dans ce cas le timon sera toujours situé à l'opposé de l'opérateur de ligne pour ne pas le gêner dans son action. Les roues seront placées au sommet d'un losange inscrit dans le rectangle avec des roues librement pivotantes au voisinage des moyens d'attelage (au centre des grands côtés du rectangle) et des roues fixes (ou à orientation verrouillable) au milieu des petits côtés du rectangle.

Il faut noter que la disposition des roues au sommet d'un losange inscrit dans le contour rectangulaire de la base est une disposition utile pour la manoeuvre la plus aisée des bases dans la zone 3 du poste de travail si les roues fixes ne sont pas déverrouillables. C'est en effet le moyen qui permet un pivotement de la base sur elle-même dans un espace minimum centré autour de l'axe vertical médian à l'aplomb de l'axe de rotation des roues fixes.

En plus, dans l'exemple illustré par les figures, les roues fixes forment un frein au déplacement spontané ou accidentel des bases en direction de la ligne de circulation.

Enfin, dans toutes les variantes de réalisation la base roulante peut être avec plateau ou plate-forme inclinable pour la présentation des pièces au poste de travail.

## Revendications

1. Procédé d'approvisionnement en pièces d'un poste de travail situé au bord d'une ligne (1) de circulation d'une succession de structures (2) à chacune desquelles un opérateur de ligne (L) ajoute au moins l'une desdites pièces, mettant en oeuvre des bases roulantes (4, 5) de support et de présentation des pièces à l'opérateur de ligne, ce poste comportant un emplacement (3) de bord de ligne destiné à recevoir au moins une base roulante (4) dans une zone de service, proche de la ligne (1) et une base roulante (5) dans une zone d'attente, derrière la base roulante (4) en service dans une direction perpendiculaire à la ligne (1), **caractérisé en ce qu'**il consiste, lorsque la base roulante (4) en service est vide, à faire déplacer par l'opérateur de ligne (L) la base roulante vide (4) de la zone de service vers une zone d'évacuation (6) latéralement adjacente aux zones de service et d'attente susdites, à faire extraire ladite base vide de la zone d'évacuation par un opérateur logistique (T), à faire déplacer par l'opérateur logistique (T) la base pleine (5) de la zone d'attente vers la zone de service et à faire placer par l'opérateur logistique (T) une nouvelle base pleine (12) dans la zone d'attente ainsi libérée de l'emplacement (3).

2. Procédé selon la revendication 1, mis en oeuvre avec des bases roulantes de forme inscriptible dans un rectangle (7) **caractérisé en ce que**, dans les zones d'attente et de service, on place chaque base de sorte que la plus grande dimension du rectangle (7) soit parallèle à la ligne (1) de circulation des structures et que dans la zone d'évacuation, cette plus grande dimension soit perpendiculaire à la ligne de circulation (1).

## Claims

1. A method of supplying parts to a workstation situated beside an assembly line (1) for passing a succession of structures (2) to which a line operator (L) adds at least one of said parts, the method implementing wheeled units (4, 5) for supporting and presenting parts to the line operator, the workstation including a location (3) beside the line for receiving at least one wheeled unit (4) in a service zone close to the line (1) and a wheeled unit (5) in a waiting zone behind the in-service wheeled unit (4) in a direction that is perpendicular to the line (1), the method being **characterized in that**, when the in-service wheeled unit (4) is empty, it consists in the line operator (L) causing the empty wheeled unit (4) to move from the service zone to a removal zone (6) laterally adjacent to the above-mentioned service and waiting zones, in causing said empty unit to be extracted from the removal zone by a logistics operator (T), in causing the logistics operator (T) to move the full unit (5) from the waiting zone to the service zone, and in causing the logistics operator (T) to place a new full unit (12) in the waiting zone as released in this way of the location (3).

2. A method according to claim 1, implemented with wheeled units of a shape that can be inscribed in a rectangle (7), the method being **characterized in that** in said waiting and service zones, each unit is placed in such a manner that the long dimension of the rectangle (7) is parallel to the structure assembly line (1), and in the removal zone, said long dimension is perpendicular to the assembly line (1).

## Patentansprüche

1. Verfahren zur Zuführung von Teilen zu einer Arbeitsstation, die sich am Rande eines Umlaufbandes (1) zum Umlauf einer Folge von Strukturen (2) befindet, denen ein Bandbediener (L) jeweils mindestens eines der genannten Teile hinzufügt, wobei das Verfahren rollende Untergestelle (4, 5) einsetzt, um die Teile zu tragen und sie dem Bandbediener vorzulegen, wobei diese Station einen Platz (3) am Rande des Bandes umfasst, der dazu bestimmt ist, mindestens ein rollendes Untergestell (4) in einer Betriebszone nahe des Bandes (1) und ein rollendes Untergestell (5) in einer Wartezone hinter dem in Betrieb befindlichen rollenden Untergestell (4) in einer Richtung senkrecht zum Band (1) aufzunehmen, **dadurch gekennzeichnet, dass** das Verfahren, wenn das in Betrieb befindliche rollende Untergestell (4) leer ist, darin besteht, dass der Bandbediener (L) das leere rollende Untergestell (4) von der Betriebszone hin zu einer Abtransportzone (6) verschiebt, die seitlich an die oben genannten Betriebs- und Wartezonen angrenzt, ein Bediener (T) im Logistikbereich das genannte leere Untergestell aus der Abtransportzone entfernt, der Bediener (T) im Logistikbereich das volle Untergestell (5) von der Wartezone hin zur Betriebszone verschiebt und der Bediener (T) im Logistikbereich ein neues volles Untergestell (12) in der so freigemachten Wartezone des Platzes (3) platziert.

2. Verfahren nach Anspruch 1, durchgeführt mit rollenden Untergestellen mit einer Form, die in ein Rechteck (7) einschreibbar ist, **dadurch gekennzeichnet, dass** jedes Untergestell in der Warte- und der Betriebszone so platziert wird, dass die größte Abmessung des Rechtecks (7) parallel zum Umlaufband (1) zum Umlauf der Strukturen ist und dass diese größte Abmessung in der Abtransportzone senkrecht zum Umlaufband (1) ist.
